# EUROPEAN PATENT APPLICATION

(11) **EP 1 400 801 A1**
(43) Date of publication of application: **24.03.2004**
(21) Application number: 03396082.4
(22) Date of filing: 09.09.2003
(51) Int. Cl.: G01N 21/76, G01N 21/25, G01N 21/63

(54) **Instrumentation for optical measurement of the photoluminescence and chemiluminescenece of samples**

(30) Priority: 20.09.2002 US 247632
(71) Applicant: WALLAC OY, 20101 Turku (FI)
(72) Inventor: Isaksson, Christer, 20810 Turku (FI); Ojala, Markku, 20540 Turku (FI); Salonen, Janne, 23100 Mynämäki (FI)
(74) Representative: Kupiainen, Juhani Kalervo

(57) **Abstract**

The present invention relates generally to the field of biochemical laboratory. More particularly the invention relates to the improved and more accurate instrumental features of equipment used as e.g. fluorometers, photometers and luminometers. The object of the invention is achieved by providing an optical measurement instrument for photoluminescence and chemiluminescence measurements wherein there is chemiluminescence detector (291) in such a proximity to the sample (282) that the emission radiation from the sample (282) may reach the detector (291) via a direct path. Attenuation caused by optical fibres and lenses can be totally avoided. This way it is possible to achieve an essentially improved accuracy of the chemiluminescence measurement as well as an improved overall efficiency of the optical measurements.

## Description

### Background of the invention

The present invention relates generally to the field of biochemical laboratory instrumentation for different applications of measuring properties of samples on e.g. microtitration plates and corresponding sample supports. More particularly the invention relates to the improved, reliable and more accurate instrumental features of equipment used as e.g. fluorometers, photometers and luminometers.

The routine work and also the research work in analytical biochemical laboratories and in clinical laboratories are often based on different tags or labels coupled on macromolecules under inspection. The typical labels used are different radioactive isotopes, enzymes, different fluorescent molecules and e.g. fluorescent chelates of rare earth metals.

The detection of enzyme labels can be performed by utilizing its natural biochemical function, i.e. to alter the physical properties of molecules. In enzyme immunoassays colourless substances are catalysed by enzyme to colourful substances or non-fluorescent substances to fluorescent substances.

The colourful substances are measured with absorption, i.e. photometric measurement. In the photometric measurement the intensity of filtered and stabilized beam is first measured without any sample and then the sample inside one plate is measured. The absorbance i.e. the absorption values are then calculated.

The fluorescent measurement is generally used for measuring quantities of fluorescent label substance in a sample. The most photoluminescence labels are based on molecular photoluminescence process. In this process optical radiation is absorbed by the ground state of a molecule. Due to the absorption of energy the quantum molecule rises into higher excited state. After the fast vibrational relaxation the molecule returns back to its ground state and the excess energy is released as an optical quantum. Due to losses in this process the average absorbed energies are higher than the average emitted energies.

A further measurement method is chemiluminescence measurement where emission of a substance is measured from a sample without excitation by illumination. Thus a photoluminometer can also be used as a chemiluminometer.

The typical instruments in analytical chemical research laboratories are the different spectroscopic instruments. Many of them are utilizing optical region of electromagnetic spectrum. The two common types of instruments are the spectrophotometers and the spectrofluorometers. These instruments comprise usually one or two wavelength dispersion devices, like monochromators. The dispersion devices make them capable to perform photometric, photoluminescence and chemiluminescense measurements throughout the optical spectrum.

Patent document US 6187267 describes a device for detecting chemiluminescence and photoluminescence from samples.

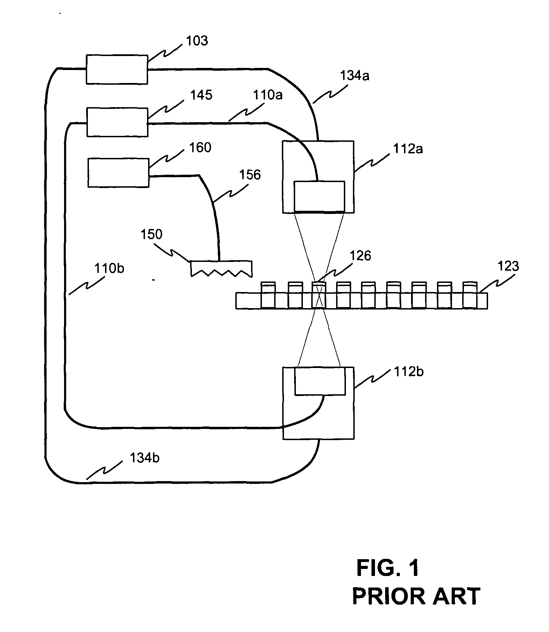

Figure 1 illustrates a prior art optical analyser, especially the main optical components and the different optical paths. The instrument may have several illumination sources in the excitation source unit 103. It may include e.g. a continuous wave lamp (cw-lamp) and a pulse lamp. The cw-lamp can be used for continuous wave photoluminescence excitation.

The radiation from the excitation source unit 103 is guided to a top measurement head 112a or to the bottom measurement head 112b via fibre optic cables 134a or 134b respectively. The optics of the measurement head guides the excitation pulse to the sample 126.

The emission unit 145 receives radiation photoluminescence emission via fibre optic cable 110a or 110b either from the top measurement head 112a or from the bottom measurement head 112b, respectively. The emission beam is directed to the tips of the thin fibre optic cables with a confocal optical relay structure. The emission unit may comprise optical components, such as lenses filters and detectors.

The instrument also comprises a chemiluminescense measurement equipment. It includes a nonconfocal optical relay structure 150, which guides the emission radiation to the thin fibre optic cable 156 by reflections and refraction. The emission radiation is guides via the fibre optic cable to the emission unit including a detector for measuring amount of radiation.

There are certain limitations related to the prior art technology. When the emission radiation is guided through long and thin optical cables the radiation attenuates before reaching the detector. This is especially harmful in chemiluminescence measurements due to very small emission radiation intensities. The nonconfocal optical relay structure also has a disadvantage of causing attenuation due to absorption of the optical materials and imperfect reflections. A further disadvantage is related to the fact that the optical head used in chemiluminescence measurements easily collects dust or other impurities. This causes further attenuation of the emission radiation. It is a relatively difficult process to clean properly the uneven optical head of the chemiluminescence optical head.

The attenuation of the emission naturally degrades the efficiency and accuracy of the measurements. The attenuation also causes that the instrument needs more calibration. For example, if a new chemiluminescence measurement unit is installed to an instrument the unit must be calibrated after the installation.

### Summary of the invention

The object of the present invention is to provide an optical instrument for laboratory measurements, wherein the described disadvantages of the prior art are avoided or reduced. The object of the invention is therefore to achieve a measurement instrument with improved accuracy, reliability, comparability and/or efficiency for performing measurements from samples.

The object of the invention is achieved by providing an optical measurement instrument for photoluminescence and chemiluminescence measurements wherein there is chemiluminescence detector in such a proximity to the sample that the emission radiation from the sample may reach the detector via a direct path. This way it is possible to achieve an essentially improved accuracy of the chemiluminescence measurement as well as an improved overall efficiency of the optical measurements.

The chemiluminescence detector is preferably a photo-multiplier tube, and there thus exists a direct path between the sample surface and the outer surface of the photomultiplier window. However, the invention is not restricted to use of any specific type of a detector.

An optical measurement instrument according to the invention for measuring samples, comprising an illumination source for excitation of a sample, a first detector for measuring photoluminescence from a sample and a chemiluminescence detector for detecting chemiluminescence emission from a sample, is characterized in that said chemiluminescence detector receives the emission directly from the sample.

Some preferred embodiments are described in the dependent claims.

An important advantage of the invention relates to achieving high measurement accuracy and efficiency. While the invention is based on direct optical coupling in chemiluminescence emission detection, attenuation caused by optical fibres and lenses can be totally avoided. The invention also allows the possibility to process different types of measurements simultaneously from different samples.

The aperture between the sample and the detector preferably determines the measurement area within the sample. Therefore the measurement area/volume can be separately determined for each sample plate type

The invention also allows the dimensioning of the aperture according to a specific measurement. This gives the ability to offer optional functions in measurement equipment. It is also possible to have the chemiluminescence measurement as an optional feature in an instrument; the chemiluminescence detector system according to the invention can be easily installed to e.g. a basic photoluminometer. New features can thus be upgraded without a need to make demanding on-site calibrations.

### Brief description of the drawings

The described and other advantages of the invention will become apparent from the following detailed description and by referring to the drawings where:
- Fig. 1: is a schematic block diagram of a prior art optical unit of a measurement instrument,
- Fig. 2: is a schematic illustration of optical paths and main components of an exemplary optical unit for a measurement instrument according to the invention,
- Fig. 3: is a schematic block diagram including a side view of an exemplary measurement instrument according to the invention, and
- Fig. 4: is a front view of a top measurement head of an exemplary measurement instrument according to the invention.

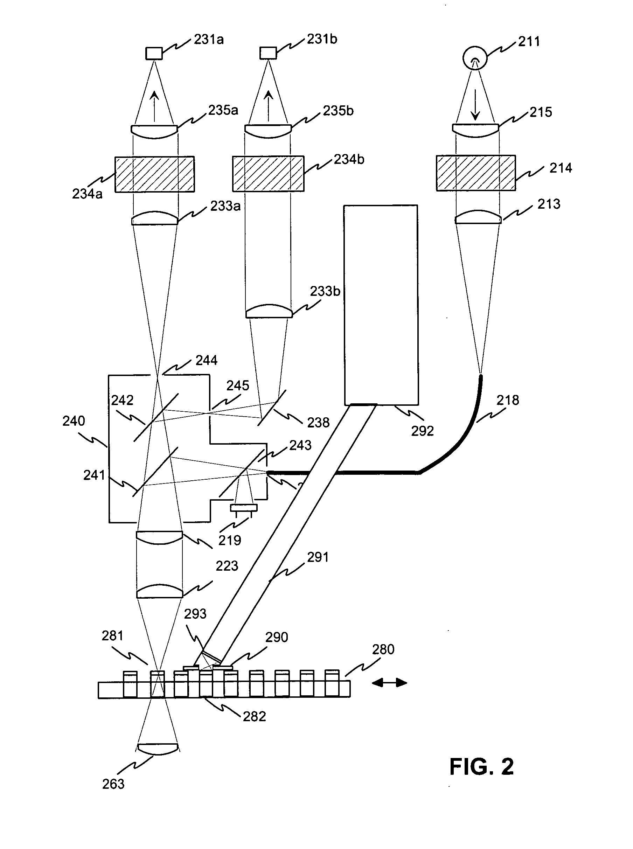

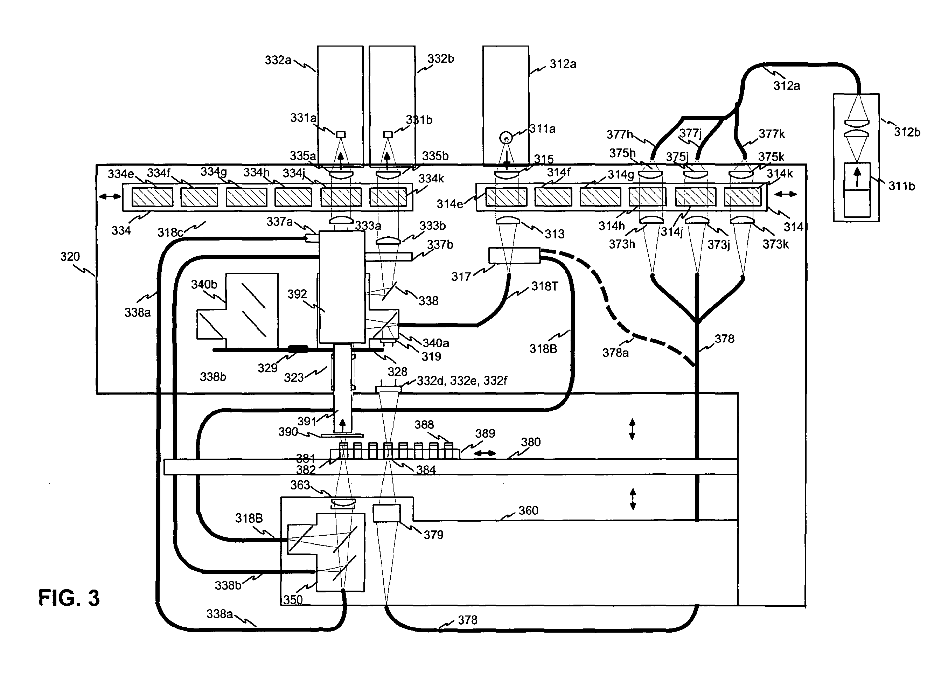

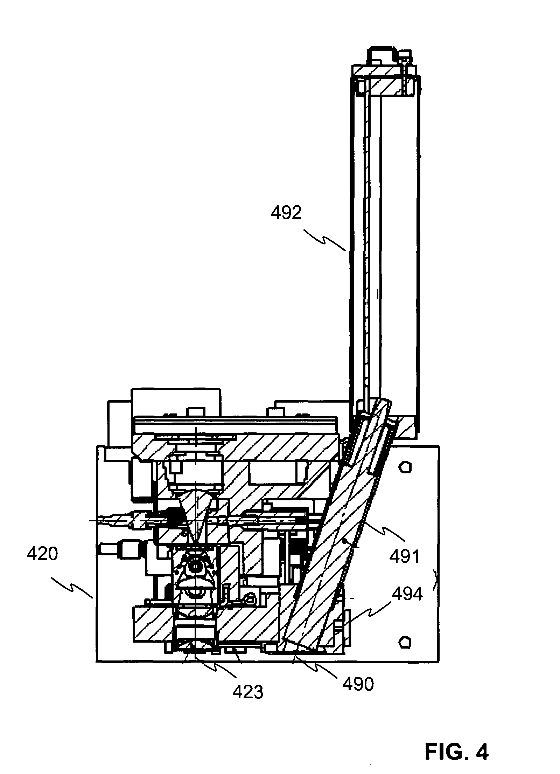

Figure 1 was already explained in the description of the prior art. In the following, the principle of the invention is first described referring to Figure 2. Then, an example of a more detailed implementation is described referring to Figures 3 and 4, which illustrate exemplary analyser equipment according to the invention.

Figure 2 illustrates main components and optical paths of an exemplary optical analyser instrument according to the invention. The instrument comprises a detector 291 for chemiluminescence measurements. In this embodiment the detector is a photo-multiplier tube. The photomultiplier tube is in this example in a slightly tilted orientation. This may be necessary in order to measure chemiluminescence and photoluminescence from samples that are near to each other. This way simultaneous measurements can be in most measurement positions of the sample plate.

The detector receives the chemiluminescence radiation from the sample 282 via an aperture of a disk 290. The radiation reaches the window 293 of the photo-multiplier tube, and after penetrating through the window the radiation reaches the active surface of the photo-multiplier tube. The block 292 includes the preamplifier and other related electronics for the photo-multiplier tube.

The instrument also comprises an illumination source 211 for the excitation of a sample in a photoluminescence measurement. The radiation from the lamp 211 is collimated with lens 215 and directed through an interference filter 214. Different filters can be selected for different wavelengths. The excitation beam is then focused to an end of a fibre optic guide 218, which guides it to an aperture 246 of an optical module. The fibre optic guide is preferably a bundle of fibres, such as 200 pieces of fibres with a diameter of 100 µm. One important purpose of the fibre optic guide is to mix the light of the illumination source in order to avoid an uneven distribution of excitation beam within the sample volume to be measured. The excitation beam is guided through an aperture 246 of the optical module and reflected by a dichroic mirror 241 inside the optical module 240. The excitation beam is further directed into the sample 281 through an aperture of the optical module and a lens system 223. A part of the illumination light is reflected by a beam splitter mirror 243 and guided through an aperture into a reference detector in order to give reference information on the actual illumination intensity. While the reference mirror is located in the changeable mirror block, the excitation filter differences can be compensated by modifying the properties of the reference mirror. This way high feedback accuracy is achieved. A beam splitter mirror can be produced e.g. by forming reflective coating for the mirror to be e.g. stripes or dots, which cover only a part of the mirror surface.

The photoluminescence emission beam from the sample 281 is directed with the lens system 223 through an aperture into the optical module 240, where it passes the (preferably) dichroic mirror 241. The dichroic mirror is preferably designed for each label so that it reflects excitation wavelength but transmits emission wavelengths. The emission beam is then divided inside the optical cube into to two beams by a second mirror 242. The mirror is preferably a dichroic mirror, which functions as a filter so that a beam with a wavelength of the first emission is transmitted through the mirror and focused through an aperture 244 according to the invention to the first detector 231a. The beam with a wavelength of the second emission is reflected and guided focused through another aperture 245 to the second detector 231b. The second dichroic mirror is therefore also preferably designed for each label / pair of labels so that it transmits first emission wavelengths but reflects second emission wavelengths.

The first emission beam received from the aperture of the optical module is collimated with a lens 233a and directed through an interference filter 234a in order to prevent light with a wavelength outside the first emission from passing to the first detector. The first emission beam is then focused with lens 235a to the first detector 231a. The second emission beam received from another aperture of the optical module is reflected with a mirror 238 to a lens 233b where the beam is collimated and directed through a second interference filter 234b in order to prevent light with a wavelength outside the second emission from passing to the second detector. The second emission beam is then focused with lens 235a to the first detector 231a. The signals received from the detectors are then amplified and processed to achieve a value for the intensities of the first and second emissions. The instrument may also comprise a bottom measurement head for measuring photoluminescence radiation below the sample, 263.

As already mentioned, an essential feature of the invention is that the detector for the chemiluminescence measurement is near to the sample, and the radiation has a clear path from the sample to the detector and the attenuation of the chemiluminescence radiation is negligible. It is also possible to achieve low attenuation for the photoluminescence emission beam with the described instrumentation. The advantages of the invention become more apparent in the following more complete example of an optical instrument according to the invention.

Figure 3 illustrates in more detail an exemplary optical instrument according to the invention. The instrument has a top measurement head 320, which includes components for providing an excitation beam and for detecting emissions from above the sample. The instrument has also an optional bottom measurement head 360, which includes components for providing an excitation beam and for detecting emissions from below the sample. The instrument further comprises a sample platform 380, which has means for moving and a sample tray 389 in order to position successive samples 381 into the measurement volume. There may also be means provided for adjusting the vertical position of the sample platform relative to the top and bottom measurement heads.

The instrument comprises a detector 391 for chemiluminescence measurements. In this embodiment the detector is a photo-multiplier tube. The detector receives the chemiluminescence radiation from the sample via an aperture of a disk 390. The chemiluminescence detector is in front of the photoluminescence components, and thus the chemiluminescence measurement is made from a sample 382 which is more on the front, whereas the photoluminescence measurement is made from a sample 381 which is more on the back in Figure 3. Thus a photoluminescence measurement and a chemiluminescence measurement can be performed simultaneously from different samples. The detector can be used in analogue mode or digital mode, or if the properties of the photo-multiplier tube allow, both modes may be used simultaneously. The preamplifier and other related electronics for the photo-multiplier tube are located in a housing 392 above the photo-multiplier tube.

The aperture discs may be changeable so that different size apertures can be used with different sample plates. Especially, if the aperture disks are manually changeable, they may preferably be equipped with machine readable codes, such as bar codes, so that the processor of the equipment can check with a code reader, which type of aperture disk is installed. This way it can be certified that a correct type of aperture disk is used for each measurement. The bar code reader or related electronics are not shown in Figure 3.

The instrument has one or two illumination sources for providing excitation in photoluminescence measurements. The main illumination source 312a includes a pulse lamp, and the optical energy of each pulse is preferably equal. The excitation beam generated by the pulse lamp is collimated with a lens 315 and directed through an interference filter 314. The filter is placed on a filter slide, so that the excitation filter to be used in a measurement can be selected from several filters. The excitation beam is then focused to an end of a fibre optic guide 318, which mixes the excitation beam and guides it to an aperture of an optical module 340a, which is located behind the photo-multiplier tube. The optical module 340 and the lens system 323 directs the excitation beam into the sample 381. The optical module is not described here in more detail because it was explained in relation to Figure 2.

The equipment may also include a second pulse lamp 312b, 311b, which may be a low power lamp, e.g. for simultaneous photometric measurements. The instrument has an optical fibre guide 312a for guiding the light from the second lamp. The light can be distributed for the photometric measurement into three filters 314h, 314j and 314k with fibre branches 377h, 377j and 377k.

The light beams are collimated with lenses 375h, 375j and 375k before directing the beams through the filters. The filters can be located on the same or different filter slide as the filter 314e for the first illumination source. If the same filter slide is used for filters of both lamps, the simultaneous measurement modes must be taken into account when the location of the filters is planned. After filtering, the beams are collimated into ends of three optical fibre cables 378, which are led to the bottom measurement head for the photometric measurement. The light beams from the optical cables 378 are focused to three samples 384 with a lens system 379 including lenses for each three beams. After transmitting through the samples the beams are measured with three detectors 322d, 322e and 322f, which are e.g. a photo diodes. The three ends of the fibre optic cables, three lenses, three simultaneously measured samples and three detectors are in this case located in a row perpendicular to the plane of the drawing and thus only one of them can be seen in the drawing.

It is preferable to have a separate optics for the photometrics measurement so that a photoluminescence measurement and a photometrics measurement can be performed simultaneously from different samples. If simultaneous photoluminescence and photometric measurements are required, the analyzer is preferably equipped with two pulse lamps. However, it is also possible to use an instrument with one lamp for photometrics measurements. For example, an optical switch 317 may have an output for an optical fibre 378a, which leads light from the lamp 312a to the photometrics measurement optics 379. It is then possible to control the optical switch either to guide the light for providing excitation for an emission measurement or to guide the light the a photometric measurement.

An optical fibre 318T is used for guiding the excitation beam from the optical switch 317 to the optical module 340 of the top measurement head. An optical fibre 318B is used for guiding the excitation beam from the optical switch 317 to the optical module 350 of the bottom measurement head. The instrument may also have a further lamp so that different lamps can be selected for providing the excitation beam of the top head and the bottom head. In this case, a more versatile optical switch system is required.

The emission beam from the sample 381 is directed with the lens system 323 into the optical module 340 where the emission beam is divided into to two beams. A dichroic mirror in the optical module preferably functions as a filter so that a beam with a wavelength of the first emission is transmitted through the to the first detector 331a, and a beam with a wavelength of the second emission is reflected to the second detector 331b. The detector can be e.g. a photo-multiplier tube, which may be used in analogue mode or in photon count mode, or in both modes simultaneously. When the equipment includes two photoluminescence detectors they may be of different types and the detection modes may be different during a measurement.

The first emission beam is collimated with a lens 333a and directed through an interference filter 334j in order to prevent light with a wavelength outside the first emission from passing to the first detector. The first emission beam is then focused with lens 335a to the first detector 331a. The second emission beam is reflected with a mirror 338 to a lens 333b where the beam is collimated and directed through a second interference filter 334k in order to prevent light with a wavelength outside the second emission from passing to the second detector. The second emission beam is then focused with lens 335a to the first detector 331a. The filters 334j and 334k are located on same filter slide or they may locate on different filter slides. The filter slide(s) is movable so that the filters used in the measurement can be selected from a number of filters with different pass-band wavelengths.

In an instrument also comprising a bottom measurement head there are optical switches 337a and 337b for selecting the detected emission beam from the top or bottom measurement head. An optical fibre 338a is used for guiding the first emission beam from the optical module 350 of the bottom measurement head 360 to the optical switch 337a. Another optical fibre 338b is used for guiding the second emission beam from the optical module 350 of the bottom measurement head 360 to the optical switch 337b.

The signals received from the detectors are then amplified and processed to achieve a value for the intensities of the first and second emissions. Measurement signals and reference signals are amplified and read after each excitation pulse and signal corrections are calculated. Basic references are determined with standard solvents after the analyzer has been assembled. If there are more than one excitation pulses used for one well, the corresponding emission signals are digitally integrated.

The instrument comprises a carousel wheel 328 for the attachment of optical modules 340a, 340b,... The wheel can be rotated around its fixing point 329, and the optical module used in a measurement can thus be selected by controlling the position of the wheel. According to the present invention, the equipment has an optical interface of at least two emission beams and at least one excitation beam for a single optical module.

If the instrument is equipped with a bottom measurement head, there may be a similar optical module 350 used in the bottom measurement head as in the top measurement head. The excitation and emission beams are lead between the two measurement heads with optical fibres 338a, 338b and 318B. There is also a lens system 363 for focusing the beams to the sample and ends of the optical fibres. Since the optical module of the bottom measurement head needs not be so frequently changed, it may be manually changeable. Alternatively a processor-controlled carousel can also be used in the bottom measurement head.

The photo-multiplier tube and its electronics are shown reduced in size compared to other components in Figures 2 and 3. On the other hand, the optical modules are shown essentially enlarged in Figures 2 and 3 in order to better illustrate the optical paths in the instruments. The actual size of the optical modules may be as small as 20 mm x 20 mm x 20 mm. The optical modules may also have machine-readable identification codes.

The instrument is also equipped with electronics for amplifying and processing the signals from the detectors, as well as electronics for driving the lamp(s). There is also control electronics provided for controlling the measurements, such as selecting filter(s), selecting the optical module(s), controlling optical switch(es), controlling the position of the sample tray 389 for selecting the sample to be measured, and controlling the positions of the measurement heads 320 and 360 relative to the sample platform 380. The main electronics is not shown in Figure 3, as the required electronics can be designed by a skilled person in the art.

Figure 4 illustrates a front view of an exemplary top measurement head 420 according to the invention. The dimensions of components have correct relations in this Figure. The optical components for photoluminescence measurement are located above the lens system 423. A photo-multiplier tube 491 is located at the side of the measurement head in a slightly tilted orientation. The emission radiation achieves the window of the photo-multiplier tube through the aperture 490. The electronics 492 for the photo-multiplier tube is located above the tube. The chemiluminescence detector unit includes components 490-492, and means 494 for attaching the detector unit to the top measurement head. The attachment is such that it is easy to upgrade or change the chemiluminescence detector unit if needed.

In the preferred embodiment the user can adjust various parameters of a measurement. The excitation pulse energy is adjusted by the discharge voltage and by the capacitors of the flash lamp power supply. Total excitation energy of one measurement is controlled by measuring every pulse and comparing the sum to a reference level of the integrator. Also the timing and repetition parameters of measurements are preferably user adjustable.

Next some typical measurements are described in more detail. In this description the use of an optical instrument according to Figure 3 is referred to.

### Chemiluminescence measurement

In a chemiluminescence measurement no excitation pulse is given. The analogue gates or a digital window for the measurement period is set. After a sample is chosen a first period for measuring illumination is triggered. The length of the measurement period is e.g. 1 ms. Detected signals are read, further measurement periods are triggered, and the corresponding signals are read. The measurement periods are repeated for e.g. 1000 times, which gives 1 second for the total measurement time. Finally the measured signals are summed to achieve the result of the total measurement.

### FI and TRF measurements

In a prompt photoluminescence, i.e. FI measurement, one excitation pulse is given for each sample to be measured. In a FI measurement an excitation filter and an emission filter are selected as was described above. A suitable optical module is also selected; the optical module may be a general-purpose module, or it may be a module that is especially designed for a determined label substance.

After a sample has been chosen for the measurement an excitation pulse is transmitted, and reference R₁ is read wherein Rᵢ is the amount of light that has been used in the excitation of the label. The illumination reference is received from a reference detector 319. Emission signals S1_{A} and S1_{B} are then read from the detectors. A correction factor for the signals is calculated on the basis of the illumination reference value. The long-term stability of the equipment is fixed to this amount of light when using a determined excitation filter and mirror block.

If several excitation pulses are used for one sample, the sequence is repeated and the results are summed or averaged. This leads to improved signal-to-noise ratio of the measurement.

A time resolved photoluminescence measurement, i.e. TRF measurement, is equal to the FI measurement except that several excitation pulses are formed for each sample and corresponding emissions are measured. The measurement signals and reference signals are read after each excitation pulse and signal corrections are calculated. Basic references are determined with standard solvents after the analyzer has been assembled. After receiving all emission signals from a sample, the results are preferably digitally integrated. Finally, a linear correction can be made for the digital signal using a reference.

In this patent specification the structure of the components in an optical measurement instrument is not described in more detail as they can be implemented using the description above and the general knowledge of a person skilled in the art.

An optical instrument includes control means for performing the optical measurement process. The control of the measuring process in an optical measurement instrument generally takes place in an arrangement of processing capacity in the form of microprocessor(s) and memory in the form of memory circuits. Such arrangements are known as such from the technology of analyzers and relating equipment. To convert a known optical instrument into an equipment according to the invention it may be necessary, in addition to the hardware modifications, to store into the memory means a set of machine-readable instructions that instruct the microprocessor(s) to perform the operations described above. Composing and storing into memory of such instructions involves known technology which, when combined with the teachings of this patent application, is within the capabilities of a person skilled in the art.

Above, an embodiment of the solution according to the invention has been described. The principle according to the invention can naturally be modified within the frame of the scope defined by the claims, for example, by modification of the details of the implementation and ranges of use.

The embodiments described above mainly relate to multiemission measurements. However, even if the invention has special advantages when applied to double emission measurements, the invention can as well be applied in other types of measurements, such as single emission measurements.

Although the invention has been described with reference to the different microtitration plates it is equally applicable to any form of sample matrix like gels and filter.

Although the invention is described with the arrangement where detectors are located on the top measurement head, there is no reason why their location on the bottom measurement head should not work.

## Claims

1. An optical measurement instrument for measuring samples, comprising an illumination source for excitation of a sample, a first detector for measuring photoluminescence from a sample and a chemiluminescence detector for detecting chemiluminescence emission from a sample, **characterized in that** said chemiluminescence detector receives the emission directly from the sample.

2. An instrument according to claim 1, **characterized in that** there is a substantially direct optical path between the sample and the chemiluminescence detector.

3. An instrument according to claim 1, **characterized in that** said chemiluminescence detector is a photomultiplier.

4. An instrument according to claim 3, **characterized in that** said photo-multiplier tube is in an orientation which deviates from vertical orientation.

5. An instrument according to claim 1, **characterized in that** it comprises an aperture between the sample and said chemiluminescence detector.

6. An instrument according to claim 5, **characterized in that** said aperture has substantially the size of the sample surface.

7. An instrument according to claim 1, **characterized in that** the chemiluminescence detector is located in substantial proximity to the sample.

8. An instrument according to claim 1, **characterized in that** the medium in the optical path between the sample and the chemiluminescence detector is substantially air.

9. An instrument according to claim 1, **characterized in that** it comprises a first mirror for reflecting the excitation beam received from an illumination source into the sample and for transmitting a photoluminescence emission beam received from the sample.

10. An instrument according to claim 1, **characterized in that** the instrument comprises a second photoluminescence detector, and an optical module that comprises means for dividing the emission beam into a first emission beam for the first detector a second emission beam for the second detector.

11. An instrument according to claim 10, **characterized in that** said means for dividing the emission beam received from the sample into two emission beams is a second dichroic mirror, said mirror transmitting the first emission beam and reflecting the second emission beam.

12. An instrument according to claim 1, **characterised in that** there is an optical path between the sample and the first detector which path does not include reflection.
